# EUROPÄISCHE PATENTANMELDUNG

(11) **EP 1 079 341 A2**
(43) Veröffentlichungstag der Anmeldung: **28.02.2001**
(21) Anmeldenummer: 99123802.3
(22) Anmeldetag: 01.12.1999
(51) Int. Cl.: G07F 15/00, G07F 19/00, G07F 7/00

(54) **Verfahren und System zum Betreiben und Versorgen von Endverbrauchern mit einem Versorgungsmedium, wie Energie und Wasser, über ein Versorgungsnetz**

(30) Priorität: 27.08.1999 DE 19940904
(71) Anmelder: Deutsche Zähler-Gesellschaft Nachf. A. Stepper & Co.mbH, 22083 Hamburg (DE)
(72) Erfinder: Paasch, Karl-Heinz, DE-22083 Hamburg (DE)
(74) Vertreter: Richter, Werdermann & Gerbaulet

(57) **Zusammenfassung**

Die vorliegende Erfindung betrifft ein Verfahren und ein System zum Betreiben eines Versorgungsnetzes mit einem Versorgungsmedium, wie Strom, Fernwärme, Gas oder Wasser mit mindestens einem oder ohne Übertragungsnetz (12) und mindestens einem Verteilnetz, wobei ein Verteilnetzbetreiber (14) von mindestens einem Grundversorger (10) über mindestens ein Übertragungsnetz das Versorgungsmedium bezieht und über das Verteilnetz an Endverbraucher (18) liefert. Hierbei wird eine vorbestimmte Übertragungs- bzw. Netzkapazität des Verteilnetzes von einem Drittanbieter (24) zur Lieferung des Versorgungsmediums an Endverbraucher (18) genutzt, wobei der Drittanbieter (24) diese vorbestimmte Übertragungs- bzw. Netzkapazität vom Verteilnetzbetreiber erwirbt und eine entsprechende Lieferung an Versorgungsmedium an Endverbraucher (18) über diese Übertragungs- bzw. Netzkapazität des Verteilnetzes mit einem jeweiligen Endverbraucher (18) abrechnet, wobei der Endverbraucher das vom Drittanbieter gekaufte Versorgungsmedium als Zahlungsnachweis über eine Wertmarke oder Kupon (35) bezahlt und diese zur Gesamtabrechnung zusammen mit der den Zählerstand (23) tragenden Zählerablesekarte (22) an den Verteilnetzbetreiber (14) oder Grundversorger (10) leitet.

## Beschreibung

Die Erfindung betrifft ein Verfahren und System zum Betreiben und Versorgen von Endverbrauchern mit einem Versorgungsmedium wie Strom, Fernwärme, Gas oder Wasser über mindestens ein Versorgungsnetz, gemäß den Oberbegriffen der Ansprüche 1 und 4.

Bisher ist das Energieversorgungsnetz lokal bzw. regional monopolisiert, d.h. es gibt nur einen einzigen lokalen oder regionalen Verteilnetzbetreiber und ein Endverbraucher kann nur von diesem Energie, beispielsweise in Form von Strom, beziehen. Dementsprechend ergeben sich zum Teil hohe Preise für die gelieferte Energie aber auch große regionale Schwankungen bei der Berechnungen eines Grundbetrages durch den Verteilnetzbetreiber.

Mit der zunehmenden Liberalisierung des Energieversorgungsmarktes wird dieses System jedoch verändert werden müssen.

Es ist Aufgabe der vorliegenden Erfindung, ein verbessertes Verfahren zur Energie- und Wasserversorgung sowie ein verbessertes Energie- und Wasserversorgungssystem zur Verfügung zu stellen, welche eine Auswahl der Endverbraucher an einem Ort aus verschiedenen Anbietern erlaubt und dadurch eine Monopolisierung ausschließt und zwar unter Verwendung eines neuen Abrechnungssystems ohne irgendwelchen zusätzlichen Installationsaufwand.

Diese Aufgabe wird durch ein Verfahren der im Oberbegriff des Anspruches 1 angegebenen Art mit den in diesem Anspruch gekennzeichneten Merkmalen und durch ein Versorgungssystem der im Oberbegriff des Anspruches 4 angegebenen Art mit den in diesem Anspruch gekennzeichneten Merkmalen gelöst.

Dazu ist es bei einem Verfahren der o. g. Art erfindungsgemäß vorgesehen, daß eine vorbestimmte Übertragungs- bzw. Netzkapazität des Verteilnetzes von mindestens einem Drittanbieter zur Lieferung des Versorgungsmediums an Endverbraucher genutzt wird, wobei der oder die Drittanbieter oder verschiedene Drittanbieter diese vorbestimmte Übertragungs- bzw. Netzkapazität vom Verteilnetzbetreiber erwirbt und eine entsprechende Lieferung an Versorgungsmedium an Endverbraucher über diese Übertragungs- bzw. Netzkapazität des Verteilnetzes mit einem jeweiligen Endverbraucher abrechnet, wobei der Endverbraucher als Zahlungsnachweis bzw. Quittung beim Stromkauf, Bezug von Versorgungsmedium Wertmarken oder Kupons über die Menge des gekauften Versorgungsmediums von dem Drittanbieter erwirbt und nach oder bei der Ablesung des verbrauchten Versorgungsmediums die Wertmarken oder Kupons dem Kärtchen mit dem abgelesenen Zählerstand beifügt und an den Verteilnetzbetreiber oder den Grundversorger als Information über die Bezahlung eines Teils des Versorgungsmediums zur Abrechnung des Verteilnetzbetreibers oder des Grundversorgers mit dem Drittanbieter weiterleitet.

Dies hat den Vorteil, daß an einem Standort mehrere Anbieter ohne zusätzliche Installationen von Geräten oder Verteilernetzen zur Verfügung stehen.

Vorzugsweise Weitergestaltungen des Verfahrens sind in den Ansprüchen 2 und 3 beschrieben.

Zweckmäßigerweise rechnet ein jeweiliger Endverbraucher mit dem Verteilnetzbetreiber nach einer vorbestimmten Zeit gemäß einer Zählerstanddifferenz eines endverbraucherseitig vorgesehenen Zählers unter Berücksichtigung der Abrechnung mit dem Drittanbieter ab. Hierbei berechnet der Verteilnetzbetreiber dem Endverbraucher einen Gegenwert einer insgesamt an diesen gelieferten Menge an Versorgungsmediums abzgl. eines Gegenwertes für die vom Drittanbieter mittels der vorbestimmten Übertragungskapazität an diesen Endverbraucher gelieferte Menge an Versorgungsmedium.

Ferner ist es bei einem Versorgungssystem zum Liefern eines Versorgungsmediums, wie Energie und Wasser, beispielsweise in Form von Strom, Gas, Fernwärme oder Wasser an einen Endverbraucher der o. g. Art erfindungsgemäß vorgesehen, daß mindestens ein Drittanbieter und mindestens eine Informationsverbindung zwischen dem Drittanbieter und dem Verteilnetzbetreiber und/ oder dem Erzeuger vorgesehen ist, wobei der Drittanbieter den Verteilnetzbetreiber und/oder den Erzeuger mittels dieser Informationsverbindung über an Endverbraucher von dem Drittanbieter jeweils veräußerte Menge an Versorgungsmedium und/oder Verkaufpreise informiert, daß für den Informationsfluß zwischen Drittanbieter und dem Endverbraucher als Zahlungsnachweis, wie Wertmarken oder Kupons über den Wert der gekauften Menge an Versorgungsmedium und für den Informationsfluß zwischen dem Endverbraucher und dem Verteilnetzbetreiber oder dem Grundversorger Zählerstandsdatenträger z.B. Zählerablesekarte mit dem Zahlungsnachweis in Form der Wertmarken oder Kupons, vorgesehen sind, und daß ein weiterer Informationsfluß zwischen dem Verteilnetzbetreiber oder dem Grundversorger und dem Drittanbieter zur Abrechnung besteht.

Dies hat den Vorteil, daß an einem Standort mehrere Anbieter ohne zusätzliche Installationen von Geräten oder Verteilernetzen zur Verfügung stehen.

Vorzugsweise Weitergestaltungen des Versorgungssystem sind in den Ansprüchen 5 bis 7 beschrieben.

In einer bevorzugten Ausführungsform umfaßt die Informationsverbindung eine einen Standort des Drittanbieters mit einem Standort des Erzeugers und/oder Verteilnetzbetreibers verbindende Informationsleitung, insbesondere Telefonleitung oder Standleitung.

Beispielsweise umfaßt die Informationsverbindung eine Übertragung von Abrechnungsinformationen zwischen einem jeweiligen Endverbraucher und dem Drittanbieter sowie eine Übertragung einer Zählerstanddifferenz des Zählers dieses Endverbrauchers über einen vorbestimmten Zeitraum, wobei beispielsweise ein Übertragungsweg der Abrechnungsinformationen und der Zählerstanddifferenz zwischen einem jeweiligen Endverbraucher an den Erzeuger und/oder Verteilnetzbetreiber vorgesehen ist, wobei dabei in der Form vorgegangen wird, daß ein Endabnehmer bei einem Drittanbieter z. B. 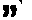 Strom kauft", d.h. beispielsweise in Form einer Wertmarke oder eines Kupons eines Drittanbieters, z.B. an einem Kiosk, erwirbt. Bei der Ablesung des Stromes z. B. bei der Jahresablesung werden dann von dem Endverbraucher Kärtchen ausgefüllt, auf dem der abgelesene Zählerstand vermerkt wird. Dieser Karte fügt der Endverbraucher die gekaufte Wertmarke bei, die z.B. auf das Kärtchen mit dem vermerkten Zählerstand aufgeklebt wird, und sendet beides an den Verteilnetzbetreiber oder an den Grundversorger, so daß diese dann mit dem Drittanbieter abrechnen können.

Nachstehend wird die Erfindung anhand der beigefügten Zeichnung näher erläutert.

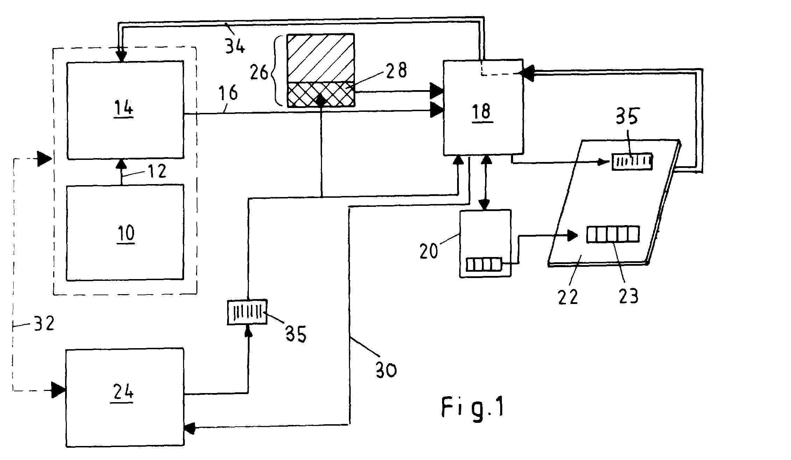

Diese zeigt in der einzigen Fig. 1 ein schematisches Blockschaltbild eines erfindungsgemäßen Versorgungssystems für ein Versorgungsmedium, das Strom, Wasser, Fernwärme oder Gas sein kann.

Nachfolgend wird die Erfindung lediglich beispielhaft anhand eines Stromversorgungsnetzes beschrieben, jedoch Versorgungsnetze für andere Versorgungsmedien können ebenfalls in Betracht kommen. Die Erfindung ist jedoch auf jedes Energieversorgungsnetz und auch auf Wasserversorgungsnetze anwendbar, unabhängig davon ob der Energieträger Strom, Gas, Erdgas oder ein erwärmtes Medium, wie Luft oder Wasser, ist.

Bei dem in der Fig. 1 dargestellten Versorgungssystem liefert ein Stromerzeuger bzw. Grundversorger 10 über ein Übertragungsnetz 12 Strom als Energieträger z.B. an einen Verteilnetzbetreiber 14, welcher wiederum über ein Verteilnetz 16 diesem Strom an Endverbraucher 18 weitergibt. Bei diesem Endverbraucher 18 ist ein Zähler 20 vorgesehen, welcher die vom Verteilnetzbetreiber 14 gelieferte Energiemenge, beispielsweise in kWh, bestimmt. Mittels einer Zählerstanddifferenz nach einem vorbestimmten Zeitraum, von beispielsweise einem Jahr, rechnet der Verteilnetzbetreiber 14 auf der Grundlage einer Zählerablesekarte 22 ab, welche vom Endverbraucher mit einem aktuellen Zählerstand 23, beispielsweise am Jahresende, ausgefüllt und an den Verteilnetzbetreiber 14 auf einem Übertragungsweg 34 übersendet wurde.

Erfindungsgemäß ist ein Dritt- oder Billiganbieter 24 vorgesehen, welcher zwar selbst kein Verteilernetz betreibt, was jedoch nicht ausschließt, daß dieser auch Verteilernetze betreibt aber eine gewisse Übertragungs- oder Netzkapazität beim Verteilnetzbetreiber 14 einkauft und selbst Strom an den Endverbraucher 18 verkauft. Auf diese Weise hat der Endverbraucher 18 die Auswahl zwischen zwei Anbietern und kann sich ggf. den günstigeren aussuchen. Hierbei kann der Drittanbieter 24 durchaus günstiger Strom anbieten, weil er beispielsweise in großen Mengen und dadurch kostengünstig Übertragungskapazität bzw. Energie bzw. Durchleitungskapazität einkauft. Ferner kann es für den Verteilnetzbetreiber 14 vorteilhaft sein, Strom über Unteranbieter 24 zu vertreiben, da er sich entsprechende Aufwendungen und Kosten für Werbung und direkte Kundenbetreuung wenigstens teilweise erspart und sich ganz auf den Betrieb, die Wartung und Instandhaltung des Verteilnetzes 16 konzentrieren kann. Ferner kann der Verteilnetzbetreiber 14 oder Erzeuger 10 über den Drittanbieter 24 ggf. auch an Kunden außerhalb seines regionalen Verteilnetzes 16 Strom liefern, wenn der Drittanbieter beispielsweise mit anderen, benachbarten Verteilnetzbetreibern entsprechende Vereinbarungen getroffen hat und die dortigen Stromerzeugungskapazitäten ggf. nicht zum Decken des Bedarfes ausreichen oder die dortigen Stromkosten höher sind.

Während der Verteilnetzbetreiber 14 weiterhin die gesamte vom Endverbraucher 18 benötigte Energiemenge 26 über sein Verteilnetz 16 liefert, hat der Drittanbieter 24 einen Liefervertrag mit dem Endverbraucher 18 über ein bestimmte Energiemenge 28 abgeschlossen. Diese rechnet der Drittanbieter 24 direkt mit dem Endverbraucher 18 ab. Hierüber erhält der Endverbraucher 18 vom Drittanbieter 24 eine Wertmarke oder einen Kupon 35 über den Wert des vom Drittanbieter 24 gekauften Stromes. Letzterer sendet an seinen lokalen Verteilnetzbetreiber 14 den Zählerstand 23 zu einem vorbestimmten Zeitpunkt mittels der Zählerablesekarte 22 zusammen mit einer Abrechnung 30, z.B. in Form der Wertmarke 35, mit dem Drittanbieter 24. Der Verteilnetzbetreiber 14 oder der Grundversorger rechnet dann gegenüber dem Kunden, d.h. dem Endverbraucher 18 nur diejenige Energiemenge ab, die die vom Drittanbieter 24 an den Endverbraucher 18 verkaufte Energiemenge übersteigt; also gesamte gelieferte Energiemenge 26 minus der vom Drittanbieter 24 verkaufte Energiemenge 28.

Zusätzlich oder alternativ ist eine Informationsverbindung 32 zwischen dem Drittanbieter 24 und dem Verteilnetzbetreiber 14 bzw. dem Grundversorger 10 vorgesehen. Über diese Informationsverbindung 32 unterrichtet der Drittanbieter 24 den Verteilnetzbetreiber 14, welche Strommenge er zu welchem Preis an den Endverbraucher 18 verkauft hat. Dies kann dann der Verteilnetzbetreiber 14 ggf. direkt in seiner Abrechnung bzw. Jahresabrechnung gegenüber dem Endverbraucher 18 berücksichtigen, ohne daß letzterer die Abrechnung 30 übersenden muß.

Der Drittanbieter 24 kauft also Netzkapazität bzw. Energie bzw. Durchleitungskapazität bei dem Verteilnetzbetreiber 14 und/oder Grundversorger 10 ein und veräußert eine über diese gelieferte Strommenge an den Endverbraucher 18 weiter, welcher aber trotzdem nach wie vor über das Verteilnetz 16 seines Verteilnetzbetreibers 14, welcher dann unterschiedlich vom Drittanbieter 24 ist, erhält. Der Drittanbieter 24 steht dabei notwendigerweise in vertraglicher Beziehung mit dem Verteilnetzbetreiber 14 und/oder dem Grundversorger 10. In einem konkreten Beispiel kauft der Drittanbieter 14 bei dem Grundversorger 10 eine bestimmte Energiemenge ein und zahlt diese direkt an den Grundversorger 10. Diese Energie liefert der Drittanbieter 24 an den Endverbraucher 18 über die Leitungen des Grundversorgers 10 und des Verteilnetzbetreibers 14 und bezahlt für diese Durchleitung direkt an den Grundversorger und den Verteilnetzbetreiber 14. Vom Endverbraucher 18 erhält der Drittanbieter 24 schließlich den vertraglich festgelegten Preis für die entsprechend gelieferte Energiemenge, wobei dieser Preis üblicherweise niedriger ist als ein Preis für eine entsprechende Energiemenge, die der Endverbraucher 18 direkt vom Verteilnetzbetreiber 14 bezieht.

### BEZUGSZEICHENLISTE

- 10: Grundversorger
- 12: Übertragungsnetz
- 14: Verteilnetzbetreiber
- 16: Verteilnetz
- 18: Endverbraucher
- 20: Zähler
- 22: Zählerablesekarte
- 23: Zählerstand
- 24: Drittanbieter
- 26: gesamte vom Verbraucher benötigte Energiemenge
- 28: vom Drittanbieter verkaufte Energiemenge
- 30: Abrechnungsfluß zwischen Drittanbieter und Endverbraucher
- 32: Informationsverbindung
- 34: Übertragungsweg
- 35: Wertmarke / Kupon

## Patentansprüche

1. Verfahren zum Betreiben eines Versorgungsnetzes mit einem Versorgungsmedium, wie Strom, Fernwärme, Gas oder Wasser mit mindestens einem oder ohne ein Übertragungsnetz und mindestens einem Verteilnetz, wobei mindestens ein Verteilnetzbetreiber von mindestens einem Grundversorger über mindestens eines der Netze das Versorgungsmedium bezieht und über das Verteilnetz an Endverbraucher liefert,
dadurch gekennzeichnet,
daß eine vorbestimmte Übertragungs- bzw. Netzkapazität des Verteilnetzes von mindestens einem Drittanbieter zur Lieferung des Versorgungsmediums an Endverbraucher genutzt wird, wobei der oder die Drittanbieter oder verschiedene Drittanbieter diese vorbestimmte Übertragungs- bzw. Netzkapazität vom Verteilnetzbetreiber erwirbt und eine entsprechende Lieferung an Versorgungsmedium an Endverbraucher über diese Übertragungs- bzw. Netzkapazität des Verteilnetzes oder mehrere Verteilernetze mit einem jeweiligen Endverbraucher abrechnet, wobei der Endverbraucher als Zahlungsnachweis bzw. Quittung beim Bezug von Versorgungsmedium Wertmarken oder Kupons über die Menge des gekauften Versorgungsmediums von dem Drittanbieter erwirbt und nach oder bei der Ablesung des verbrauchten Versorgungsmediums die Wertmarken oder Kupons als Quittung dem Kärtchen mit dem abgelesenen Zählerstand beifügt und an den Verteilnetzbetreiber oder den Grundversorger als Information über die Bezahlung eines Teils des Versorgungsmediums zur Abrechnung des Verteilnetzbetreibers oder des Grundversorgers mit dem Drittanbieter weiterleitet.

2. Verfahren nach Anspruch 1,
dadurch gekennzeichnet,
daß ein jeweiliger Endverbraucher mit dem Verteilnetzbetreiber nach einer vorbestimmten Zeit gemäß einer Zählerstanddifferenz eines endverbraucherseitig vorgesehenen Zählers unter Berücksichtigung der Abrechnung mit dem Drittanbieter abrechnet.

3. Verfahren nach Anspruch 1 oder 2,
dadurch gekennzeichnet,
daß der Verteilnetzbetreiber dem Endverbraucher einen Gegenwert einer insgesamt an diesen gelieferten Menge an Versorgungsmedium abzgl. eines Gegenwertes für die vom Drittanbieter mittels der vorbestimmten Übertragungskapazität an diesen Endverbraucher gelieferte Menge an Versorgungsmedium vermittels des Zahlungsnachweises, wie Wertmarke oder Kupon, berechnet.

4. Versorgungssystem zum Liefern eines Versorgungsmediums, wie Strom, Gas, Fernwärme oder Wasser an einen Endverbraucher (18), wobei das Versorgungssystem für das Versorgungsmedium mindestens ein Übertragungsnetz (12) zum Übertragen des Versorgungsmediums von mindestens einem Grundversorger (10) zu mindestens einem Verteilnetzbetreiber (14), mindestens ein Verteilnetz (16) zum Verteilen des Versorgungsmediums von dem Verteilnetzbetreiber (14) an die Endverbraucher (18) und einen endverbraucherseitig angeordneten Zähler (20) zum Messen von einer an den Endverbraucher (18) gelieferten Menge an Versorgungsmedium umfaßt,
dadurch gekennzeichnet,
daß mindestens ein Drittanbieter (24) und mindestens eine Informationsverbindung (32, 34) zwischen dem Drittanbieter (24) und dem Verteilnetzbetreiber (14) und/oder dem Grundversorger (10) vorgesehen ist, wobei der Drittanbieter (24) den Verteilnetzbetreiber (14) und/oder den Grundversorger (10) mittels dieser Informationsverbindung (32) über an Endverbraucher (18) von dem Drittanbieter (24) jeweils veräußerte Mengen an Versorgungsmedium und/oder Verkaufpreise informiert, daß für den Informationsfluß zwischen Drittanbieter (24) und dem Endverbraucher (18) als Zahlungsnachweis oder Quittung, wie Wertmarken oder Kupons (35) über den Wert der gekauften Mengen an Versorgungsmedium und für den Informationsfluß zwischen dem Endverbraucher (18) und dem Verteilnetzbetreiber (14) oder dem Grundversorger (10) Zählerstandsdatenträger, z.B. Zählerablesekarte (22) mit dem Zahlungsnachweis in Form der Wertmarken oder Kupons (35), vorgesehen sind, und daß ein weiterer Informationsfluß zwischen dem Verteilnetzbetreiber (14) oder dem Grundversorger (10) und dem Drittanbieter (24) zur Abrechnung besteht.

5. Versorgungssystem nach Anspruch 4,
dadurch gekennzeichnet,
daß die Informationsverbindung eine einen Standort des Drittanbieters (24) mit einem Standort des Grundversorgers (10) und/oder Verteilnetzbetreibers (14) verbindende Informationsleitung (32), insbesondere Telefonleitung oder Standleitung, umfaßt.

6. Versorgungssystem nach Anspruch 4 oder 5,
dadurch gekennzeichnet,
daß die Informationsverbindung eine Übertragung (30) von Abrechnungsinformationen zwischen einem jeweiligen Endverbraucher (18) und dem Drittanbieter (24) sowie eine Übertragung einer Zählerstanddifferenz des Zählers (20) dieses Endverbrauchers (18) über einen vorbestimmten Zeitraum umfaßt.

7. Versorgungssystem nach Anspruch 6,
dadurch gekennzeichnet,
daß ein Übertragungsweg (34) der Abrechnungsinformationen und/oder der Zählerstanddifferenz zwischen einem jeweiligen Endverbraucher an dem Grundversorger und/oder Verteilnetzbetreiber vorgesehen ist.
